# FASCICULE DE BREVET EUROPEEN

(11) **EP 3 077 626 B1**
(45) Date de publication et mention de la délivrance du brevet: **09.08.2017**
(21) Numéro de dépôt: 14814983.4
(22) Date de dépôt: 28.11.2014
(51) Int. Cl.: F01D 5/02, F01D 5/12, F04D 29/32, F04D 29/34, C23C 4/129, C23C 4/073, F01D 5/30, F04D 29/38

(54) **ROTOR A AUBES**
ROTOR MIT SCHAUFELN
BLADED ROTOR

(30) Priorité: 06.12.2013 FR 1362237
(43) Date de publication de la demande: 12.10.2016
(73) Titulaire: Safran Helicopter Engines, 64510 Bordes (FR)
(72) Inventeur: MEZIERE, Ludovic, F-65110 Cauterets (FR)
(74) Mandataire: Gilbey, Vincent
(86) Numéro de dépôt international: PCT/FR2014/053071
(87) Numéro de publication internationale: WO 2015/082808

(56) Documents cités:
- EP-A1- 1 764 480
- EP-A2- 1 921 254
- EP-A2- 2 400 116
- EP-A2- 2 540 979

## Description

### DOMAINE TECHNIQUE

Le présent exposé concerne un rotor à aubes.

Un tel rotor peut être utilisé dans une turbomachine, terrestre ou aéronautique, et plus particulièrement dans un turboréacteur d'avion. Dans le cas particulier d'un turboréacteur d'avion, il peut s'agir d'un rotor de soufflante, de compresseur ou de turbine.

### ARRIERE PLAN

Dans le présent exposé, la direction axiale correspond à la direction de l'axe de rotation du rotor, et une direction radiale est une direction perpendiculaire à cet axe. De même, un plan axial est un plan contenant l'axe de rotation du rotor, et un plan radial est un plan perpendiculaire à cet axe.

Par ailleurs, sauf précision contraire, les adjectifs "intérieur" et "extérieur" sont utilisés en référence à une direction radiale de sorte que la partie intérieure (i.e. radialement intérieure) d'un élément est plus proche de l'axe de rotation que la partie extérieure (i.e. radialement extérieure) du même élément.

Enfin, l'amont et l'aval sont définis par rapport au sens d'écoulement normal du fluide (de l'amont vers l'aval) entre les aubes du rotor.

Le présent exposé concerne un rotor à aubes comprenant un disque formant la partie centrale du rotor, et des aubes montées sur le disque à la périphérie extérieure de celui-ci. Les aubes sont fixées au disque par des systèmes d'attache, où le pied de l'aube forme la partie mâle du système et est retenu radialement dans la partie femelle du système qui est formée à la périphérie extérieure du disque. Cette partie femelle est communément dénommée "alvéole". Le pied de l'aube et l'alvéole du disque peuvent être inclinés par rapport à la direction axiale. L'alvéole débouche sur la face périphérique extérieure du disque mais également sur au moins une des faces d'extrémité axiale - appelées faces frontales - du disque, formant ainsi une ouverture frontale. L'aube est généralement montée sur le disque en la glissant dans l'alvéole via l'ouverture frontale.

Il existe différentes solutions pour retenir axialement l'aube dans son alvéole, i.e. pour éviter que l'aube ne se déplace axialement par rapport au disque. Ces solutions connues font intervenir des éléments rapportés comme des fils ou des branches repliées aux extrémités axiales du pied d'aube, des goupilles évasées ou des flasques rapportés sur le disque. Par exemple, le document de brevet FR 2890684 B1 décrit un clinquant équipé de deux pattes repliées contre la face frontale amont du pied d'aube. Ces solutions connues augmentent souvent le nombre de pièces du rotor et peuvent compliquer le montage des aubes sur le disque. Ces solutions connues sont sensibles à la température de fonctionnement et, pour les solutions à fils ou branches repliées, à la qualité du pliage pour éviter toute ouverture en fonctionnement. En outre, elles rendent plus difficile le contrôle de l'étanchéité du système d'air entre les faces amont et aval du rotor ou le contrôle du prélèvement d'air de refroidissement dans le cas d'un rotor à aubes refroidies.

Il existe donc un besoin pour une nouvelle solution permettant de retenir axialement les aubes par rapport au disque.

### PRESENTATION GENERALE

Le présent exposé concerne un rotor à aubes comprenant :
un disque de rotor présentant deux faces frontales et une face périphérique extérieure, des alvéoles étant aménagées dans la face périphérique extérieure et débouchant sur au moins une des faces frontales, et
des aubes ayant chacune un pied par lequel l'aube est fixée dans une alvéole, une face d'extrémité du pied étant sensiblement de niveau avec la face frontale du disque lorsque l'aube est fixée dans l'alvéole.

Selon la solution proposée, une couche de revêtement est déposée sur le disque de manière à recouvrir, à la fois, au moins une partie de la face frontale du disque et au moins une partie de la face d'extrémité du pied. Le revêtement déposé établit ainsi une liaison entre l'aube et le disque, cette liaison permettant de retenir axialement l'aube par rapport au disque.

Comme indiqué, la face d'extrémité du pied est "sensiblement" de niveau avec la face frontale du disque, ce qui signifie que la face d'extrémité peut être exactement de niveau avec la face frontale du pied, mais pas nécessairement. Un décalage peut exister entre ces faces. Ce décalage peut, le cas échéant, être compensé par une surépaisseur ou une sous-épaisseur de la couche de revêtement.

Outre les caractéristiques qui viennent d'être mentionnées plus haut, la solution proposée peut présenter une ou plusieurs caractéristiques parmi les suivantes, considérées individuellement ou selon des combinaisons techniquement possibles:
- La couche de revêtement est déposée par projection thermique, en particulier par projection plasma, projection à l'arc électrique ou projection à la flamme.
- La couche de revêtement est déposée par projection thermique par flamme supersonique, en particulier par projection HVOF (pour « High Velocity Oxy-Fuel), projection HVAF (pour « High Velocity Air-Fuel) ou projection hybride.
- Le revêtement est un alliage de base nickel.
- Le revêtement est un alliage de type MCrAlY ou M correspond à l'élément Fe, Ni, Co ou un mélange de ces éléments. Le revêtement peut ainsi être un alliage de type NiCoCrAlYTa.
- L'épaisseur de la couche de revêtement est comprise entre 0,5 et 1 mm.

Le présent exposé concerne également une turbomachine comprenant un rotor à aubes tel que précédemment décrit.

Les caractéristiques et avantages de la solution proposée, ainsi que d'autres, apparaîtront à la lecture de la description détaillée qui suit, d'exemples de réalisation. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention.

Sur ces dessins, d'une figure (FIG) à l'autre, des éléments (ou parties d'élément) identiques sont repérés par les mêmes signes de référence.

La FIG 1 représente partiellement, en perspective, un exemple de rotor selon le présent exposé.

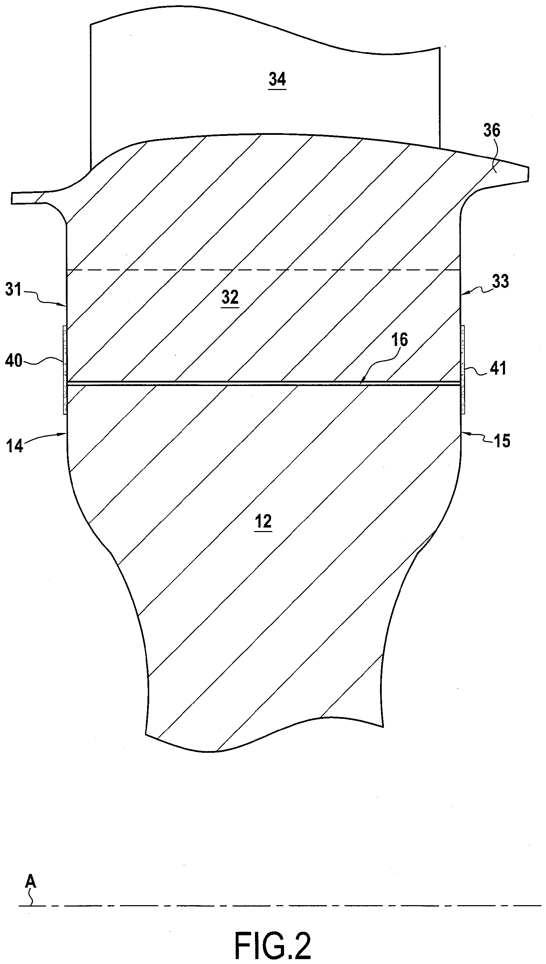

La FIG 2 une vue en coupe du rotor de la FIG 1 selon le plan II-II.

### DESCRIPTION DETAILLEE D'EXEMPLE(S)

Des exemples de réalisation sont décrits en détail ci-après, en référence aux dessins annexés. Ces exemples illustrent les caractéristiques et les avantages de l'invention. Il est toutefois rappelé que l'invention ne se limite pas à ces exemples.

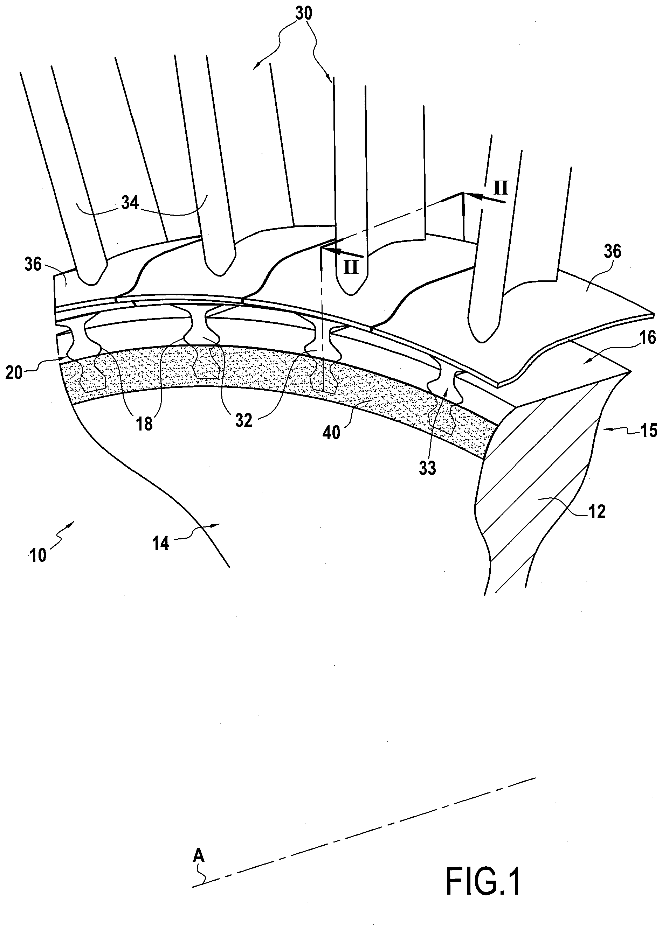

La FIG 1 représente partiellement un exemple de rotor à aubes ayant un axe de rotation A. Sur cette figure, seule une portion annulaire de ce rotor est représentée. Ce rotor 10 comprend un disque 12 ayant une face d'extrémité amont 14 et une face d'extrémité aval 15, opposée axialement à la face amont 14. Ces faces d'extrémité sont appelée « faces frontales » dans le présent exposé. Elles s'étendent sensiblement radialement par rapport à l'axe A. Le disque 12 a également une face périphérique extérieure 16 s'étendant entre les faces frontales.

Des alvéoles 18 sont aménagées dans la face périphérie extérieure 16. Ces alvéoles 18 forment des rainures à la surface extérieure du disque 12. Ces rainures peuvent être droites ou courbes, parallèles ou inclinées par rapport à l'axe A. Elles débouchent sur la face périphérique extérieure 16 en formant une fente. En outre, elles débouchent sur la face frontale amont 14 et/ou la face frontale aval en formant une ouverture 20.

Le disque 12 comprend également des aubes 30 montées à sa périphérie. Chaque aube 30 a un pied 32 surmonté d'une pale 34. Dans l'exemple, une plateforme 36 s'étend circonférentiellement à la base de la pale 34. Lorsque les aubes 30 sont fixées sur le disque 12, leurs plateformes 36 sont disposées bord à bord de manière à former une couronne rotative délimitant une surface de révolution autour de l'axe A de rotation du disque. Cette couronne a, notamment, pour fonction de délimiter la surface intérieure de la veine d'écoulement du fluide circulant entre les pales 34.

Les aubes 30 sont fixées au disque 12 par leur pied 32, celui-ci se logeant dans une alvéole 18. La forme du pied 32 peut être complémentaire de celle de l'alvéole 18, comme dans l'exemple représenté où le pied 32 a une section transversale en forme de sapin. D'autres formes peuvent toutefois être utilisées comme, par exemple, une forme en queue d'aronde. Selon une variante (non représentée), la forme du pied 32 peut être complémentaire d'une partie seulement, notamment la partie supérieure, de l'alvéole 18. C'est le cas, par exemple, lorsqu'une cale est disposée entre le pied 32 et le fond de l'alvéole 18.

Le pied 32 s'étend depuis sa face d'extrémité amont 31 vers sa face d'extrémité aval 33 en suivant le même tracé que l'alvéole 18. Lorsque l'aube 30 est fixée dans l'alvéole 18, la face d'extrémité 31 du pied 32 se trouve au niveau de l'ouverture 20 et de la face frontale 14 du disque 12.

Une couche de revêtement 40 est déposée par projection thermique sur une partie de la face frontale 14 du disque de sorte que le revêtement 40 recouvre également une partie de la face d'extrémité 31 du pied 32. En d'autres termes le revêtement 40 est déposé à cheval entre la face frontale 14 et la face d'extrémité 31. Dans l'exemple représenté, une couche annulaire de revêtement 40 est déposée sur la face frontale 14 de manière à recouvrir la partie basse ou partie intérieure des ouvertures 20 et, donc, la partie intérieure des faces d'extrémité 31. Le revêtement 40 établit ainsi une liaison physique entre le disque 12 et l'aube 30, cette liaison étant suffisamment résistante pour s'opposer au mouvement axial de l'aube 30 par rapport au disque 12.

La résistance de la liaison créée dépend de la résistance propre du revêtement 40 mais également de l'adhérence du revêtement 40 sur le disque 12 et l'aube 30. Le fait de déposer le revêtement 40 par projection thermique - en particulier par projection thermique par flamme supersonique et, par exemple, par projection HVOF - contribue à la fois à la bonne résistance mécanique du revêtement 40 déposé et à l'adhérence de celui-ci sur le disque 12 et l'aube 30. L'adhérence du revêtement 40 dépend également de l'affinité entre le matériau du revêtement et celui du disque 12 et de l'aube 30. Par exemple, dans une turbomachine aéronautique, de type turboréacteur d'avion, où le disque 12 et les aubes 30 sont réalisés en superalliage de base nickel, le revêtement 40 peut être un alliage de base nickel, par exemple de type MCrAlY, ces matériaux ayant une bonne affinité. La résistance mécanique de la couche de revêtement 40 dépend également de son épaisseur. Dans la pratique, une épaisseur de couche comprise entre 0,5 et 1 mm est un bon compromis entre résistance mécanique et économie de matière.

Une autre couche de revêtement 41 peut être déposée de la même manière que la couche de revêtement 40, sur la face frontale aval 15 et la face d'extrémité 33 du pied 32. Cette couche de revêtement 41 peut être déposée en complément de la couche de revêtement 40, comme dans l'exemple représenté, où constituer une alternative à la couche de revêtement 41.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Rotor à aubes comprenant:
un disque (12) de rotor présentant deux faces frontales (14, 15) et une face périphérique extérieure (16), des alvéoles (18) étant aménagées dans la face périphérie extérieure (16) et débouchant sur au moins une des faces frontales (14, 15), et
des aubes (30) ayant chacune un pied (32) par lequel l'aube est fixée dans une alvéole (18), une face d'extrémité (31) du pied étant sensiblement de niveau avec la face frontale (14) du disque lorsque l'aube est fixée dans l'alvéole,
**caractérisé en ce qu'**une couche de revêtement (40) est déposée sur le disque (12) de manière à recouvrir à la fois au moins une partie de la face frontale (14) du disque et au moins une partie de la face d'extrémité (31) du pied (32).

2. Rotor à aubes selon la revendication 1, dans lequel la couche de revêtement (40) est déposée par projection thermique.

3. Rotor à aubes selon la revendication 1, dans lequel la couche de revêtement (40) est déposée par projection thermique par flamme supersonique.

4. Rotor à aubes selon la revendication 1, dans lequel le revêtement (40) est un alliage de base nickel.

5. Rotor à aubes selon la revendication 1, dans lequel le revêtement (40) est un alliage de type MCrAlY.

6. Rotor à aubes selon la revendication 1, dans lequel l'épaisseur de la couche de revêtement (40) est comprise entre 0,5 et 1 mm.

7. Turbomachine comprenant un rotor à aubes (10) selon l'une quelconques des revendications 1 à 6.

## Patentansprüche

1. Schaufelrotor, umfassend:
eine Rotorscheibe (12), die zwei Stirnseiten (14, 15) und eine äußere Umfangsseite (16) aufweist, wobei Hohlräume (18) in der äußeren Umfangsseite (16) ausgebildet sind und an wenigstens einer der Stirnseiten (14, 15) ausmünden, und
Schaufeln (30), die jeweils einen Fuß (32) aufweisen, mit dem die Schaufel in einem Hohlraum (18) befestigt ist, wobei eine Endseite (31) des Fußes mit der Stirnseite (14) der Scheibe im Wesentlichen in einer Ebene liegt, wenn die Schaufel in dem Hohlraum befestigt ist,
**dadurch gekennzeichnet, dass** eine Überzugsschicht (40) auf der Scheibe (12) abgeschieden ist, um sowohl wenigstens einen Teil der Stirnseite (14) der Scheibe als auch wenigstens einen Teil der Endseite (31) des Fußes (32) zu überziehen.

2. Schaufelrotor nach Anspruch 1, bei dem die Überzugsschicht (40) durch thermisches Spritzen abgeschieden ist.

3. Schaufelrotor nach Anspruch 1, bei dem die Überzugsschicht (40) durch thermisches Spritzen mittels Überschallflamme abgeschieden ist.

4. Schaufelrotor nach Anspruch 1, bei dem die Beschichtung (40) eine nickelbasierte Legierung ist.

5. Schaufelrotor nach Anspruch 1, bei dem die Beschichtung (40) eine Legierung vom Typ MCrAlY ist.

6. Schaufelrotor nach Anspruch 1, bei dem die Dicke der Überzugsschicht (40) im Bereich zwischen 0,5 und 1 mm liegt.

7. Turbomaschine, die einen Schaufelrotor (10) nach einem der Ansprüche 1 bis 6 umfasst.

## Claims

1. A bladed rotor comprising:
a rotor disk (12) presenting two front faces (14, 15) and an outer peripheral face (16), sockets (18) being provided in the outer peripheral face (16) and opening out into at least one of the front faces (14, 15); and
blades (30), each having a root (32) whereby the blade is fastened in a socket (18), an end face (31) of the root being substantially level with the front face (14) of the disk when the blade is fastened in the socket;
the rotor being **characterized in that** a coating layer (40) is deposited on the disk (12) so as to cover both at least a portion of the front face (14) of the disk and at least a portion of the end face (31) of the root (32).

2. A bladed rotor according to claim 1, wherein the coating layer (40) is deposited by thermal spraying.

3. A bladed rotor according to claim 1, wherein the coating layer (40) is deposited by supersonic flame thermal spraying.

4. A bladed rotor according to claim 1, wherein the coating (40) is a nickel-based alloy.

5. A bladed rotor according to claim 1, wherein the coating (40) is an alloy of MCrAlY type.

6. A bladed rotor according to claim 1, wherein the thickness of the coating layer (40) lies in the range 0.5 mm to 1 mm.

7. A turbine engine including a bladed rotor (10) according to any one of claims 1 to 6.
